(19) Europäisches Patentamt
European Patent Office
Office européen des brevets

(11) **EP 2 000 873 B1**

(12) **EUROPÄISCHE PATENTSCHRIFT**

(45) Veröffentlichungstag und Bekanntmachung des Hinweises auf die Patenterteilung:
**30.09.2009  Patentblatt 2009/40**

(51) Int Cl.:
*G05B 23/02* (2006.01)        *G01P 3/481* (2006.01)
*G01P 3/489* (2006.01)

(21) Anmeldenummer: **08008976.6**

(22) Anmeldetag: **15.05.2008**

(54) **Korrekturverfahren für eine mikroprozessor-gesteuerte digitale Regelung**

Correction method for a microprocessor-controlled digital controller

Procédé de correction pour un réglage numérique commandé par microprocesseur

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.06.2007  DE 102007026344**

(43) Veröffentlichungstag der Anmeldung:
**10.12.2008  Patentblatt 2008/50**

(73) Patentinhaber: **Francotyp-Postalia GmbH**
**16547 Birkenwerder (DE)**

(72) Erfinder: **Müller, Ralf**
**13355 Berlin (DE)**

(56) Entgegenhaltungen:
EP-A- 0 584 566          DE-A1- 19 540 674
DE-A1- 19 730 806        GB-A- 2 404 100
JP-A- 2000 236 688       US-A- 5 083 072
US-A- 6 000 869

## Beschreibung

Die Erfindung betrifft ein Korrekturverfahren für eine mikroprozessor-gesteuerte digitale Regelung, gemäß des Oberbegriffs des Anspruchs 1. Das Verfahren dient zum Ausgleich von zeitverzögerten Zugriffen auf Istwerte bei digitalen Regelungen, zum Beispiel bei einer Motorregelung. Die Erfindung kommt in Geräten mit Relativbewegung zwischen einem Thermotransferdruckkopf und dem Druckgut zum Einsatz, insbesondere in Frankier- und/oder Adressiermaschinen, in Peripheriegeräten bzw. in anderen Postverarbeitungsgeräten.

Bei einer Motorregelung kommt es auf die Erfassung des Istwertes und einem Vergleich mit dem Sollwert an. Ist der Istwert kleiner, wird der Motor beschleunigt und im umgekehrten Fall gebremst. Bei einer digitalen Regelung ist es wichtig, in konstanten Zeitabständen Messwertaufnahmen durchzuführen. Dies kann von einer Hardware durchgeführt werden, aus Kostengründen aber auch vom Prozessor selber.

Aus dem Europäischen Patent EP 177 055 B2 ist eine Frankiermaschine mit mikroprozessorgesteuerten Gleichstrommotor zur Steuerung derselben und ein entsprechendes Verfahren bekannt, um eine Vielzahl an Lasten zu bewegen bzw. anzutreiben, welche mit einer Antriebswelle selektiv gekoppelt werden können. Der Wickelversatz der Antriebswelle wird erfasst, um den Gleichstrommotor so zu steuern, das der tatsächliche Winkelversatz mit dem gewünschten Winkelversatz übereinstimmt. Der Gleichstrommotor wird von einem Computer via einem Leistungsschaltkreis mit Impulsbreiten-modulierten Motorsteuerungssignalen angesteuert. Ein Encoder besteht aus einer Encoderscheibe mit einer Vielzahl linearen Spalten und aus einem optischen Sensorgerät, welches zwei phasenversetzte Encodersignale ausgangsseitig abgibt.

Aus der Europäischen Patentanmeldung EP 1 755 011 A2 ist ein Motorsteuerungsverfahren und ein Motorsteuerungsapparat für einen Drucker bekannt, in welchen Encoder-Impulse an eine Steuerung geliefert werden, welche daraus u.a. eine Geschwindigkeit berechnet.

Aus dem Europäischen Patent EP 589 668 B2 ist ein System zur Stillstandsfeststellung für einen Gleichstrommotor bekannt, welcher für eine kurze Periode übersteuert werden kann, um eine hohe Beschleunigung zu erreichen. Ein Postverarbeitungssystem benötigt eine genaue Servosteuerung, um eine hohe Durchsatzrate an Poststücken zu errreichen. Dabei wäre es destruktiv, würde der Motor wegen einer Übersteuerung während eines Staues ausfallen. Deswegen wurde ein Durchschnittsverzögerungs-Schwellwert vorgeschlagen, welcher eine maximal erwünschte Betriebgrenze darstellt.

Im Patent US 6.247.774 B1 wurde bereits eine Frankiermaschine mit einer Tintenstrahldruckvorrichtung vorgeschlagen, die mindestens einen Hauptantriebsmotor und weitere Motoren, einen feststehenden Druckkopf sowie einen Encoder aufweist, wobei ein Mikroprozessor via Steuerung (ASIC) mit dem Hauptantriebsmotor steuerungsmäßig sowie mit dem Encoder verbunden ist. Der Hauptantriebsmotor ist für den Transport von Poststücken vorbei am Druckkopf mit einer Transportrolle mechanisch gekoppelt. Die Transportrolle bewegt über ein Transportband eine Umlenkrolle, welche mit dem Encoder mechanisch gekoppelt ist. Die Transportgeschwindigkeit muss konstant gehalten werden, um mittels des Druckkopfes einen qualitativ hochwertigen Abdruck auf einem Poststück während des Vorbeitransportes des Poststückes zu erzeugen.

Die Umlenkrolle hat vorzugsweise dieselbe Drehzahl, wie die Transportrolle. Der Encoder besteht zum Beispiel aus einer Encoderscheibe und einer Lichtschranke, wobei die Scheibe an allen Stellen einen Lichtstrahl unterbricht, an welchen die Scheibe keinen Schlitz aufweist. Wenn der Encoder eine Encoderscheibe mit nur einem Schlitz aufweist, wird je Umdrehung nur ein Impuls erzeugt.

Alternativ weist der Encoder eine Encoderscheibe mit einer Anzahl an Schlitzen auf. Somit wird je Umdrehung entsprechend mehr als nur ein Impuls erzeugt und es wird möglich, den Wickelversatz der Antriebswelle zu erfassen.

Bei einer Frankiermaschine wird entweder eine Hardware benötigt, welche den Mikroprozessor bei der Motorregelung entlastet, oder es muss in Kauf genommen werden, dass der Prozessor mit anderen nicht unterbrechbaren Aufgaben beschäftigt ist und somit keine periodische Abtastung von Messwerten möglich ist. Eine solche nicht unterbrechbare Aufgabe ist zum Beispiel eine Interrup Service Routine (ISR).

Für die Motorregelung werden nicht der am höchsten priorisierte Interrupt-Befehl, sondern solche von gleicher oder untergeordneter Rangfolge benutzt. Damit kann es vorkommen, dass zunächst vom Prozessor ein anderer Interrupt von gleicher oder höherer Priorität abgearbeitet werden muss, so das die Istwertaufnahme einer Messreihe nicht immer periodisch zum geforderten Zeitpunkt durchgeführt werden kann, so dass einzelne Messwerte mit einer plötzlichen Änderung auftreten, die nicht vom Motor-Last-System stammen können, weil dessen Trägheit eine plötzliche Geschwindigkeitsänderung nicht zulässt. Diese plötzliche Abweichung beruht vielmehr auf einem Mangel der Messschaltung, den Abtastzeitpunkt einzuhalten, der vom Encoderimpuls vorgegeben wird. Da bei modernen Prozessorsystemen in der Regel Multitasking-Betriebssysteme eingesetzt werden, ergibt sich die Problematik, dass der Prozessor nicht zum geforderten Zeitpunkt die Istwertaufnahme durchführen kann. Die Verzögerungszeiten können berücksichtigt werden, wenn sie regelmässig und bekannt sind, wie in US 5 083 072.

Die Aufgabe der Erfindung besteht darin, ein Korrekturverfahren für eine mikroprozessor-gesteuerte digitale Regelung eines Antriebsmotors zu schaffen, wobei die für die Regelung des Motors verwendete Schaltung hinsichtlich des Bauelementeaufwands vereinfacht werden soll, trotzdem davon auszugehen ist, dass eine bis auf einen Encoder und einen Timer reduzierte unspezielle Messschaltung nicht verhindern kann, dass dann die Istwertaufnahme nicht immer periodisch vom Mikroprozessor zum geforderten Zeitpunkt durchgeführt werden kann. Damit tritt sporadisch ein Messfehler auf, dessen Wirkung durch geeignete Maßnahmen vermindert bzw. der beseitigt werden soll.

Die Aufgabe wird durch ein Korrekturverfahren für eine mikroprozessor-gesteuerte digitale Regelung eines Antriebsmotors mit den Merkmalen des Verfahrens nach dem Anspruch 1 gelöst.

Das Verfahren macht sporadische Messfehler einer vereinfachten Messanordnung unwirksam. Es wird keine spezielle Messschaltung, sondern eine beliebig bis auf einen Encoder und einen Timer reduzierte Messschaltung eingesetzt, die mit einem Mikroprozessor verbunden oder die teilweise ein Bestandteil eines Mikroprozessors ist. Unter einem Timer soll eine Zusammenschaltung von Taktgeber und Zähler verstanden werden. Der Mikroprozessor ist programmiert, Messwerte einer Messreihe zu speichern und wieder auszulesen sowie dabei einzelne Messwerte mit einer plötzlichen Änderung auszusortieren und für die Regelung unwirksam zu machen. Die aussortierten Messwerte werden durch Werte ersetzt, die wenigstens teilweise korrigiert sind.

Es ist vorgesehen, dass die Messwerte Zählwerte sind, deren Anzahl einer Messzeitperiode proportional ist. Der Mikroprozessor ist durch eine geeignete Software zur Berechnung von Geschwindigkeitswerten aus den Zählwerten, zu deren Bewertung und Korrektur sowie zur Bereitstellung von Stellimpulsen für einen Antriebsmotor programmiert.

Dabei wird davon ausgegangen, dass sich die gemessenen Zeit-Zählwerte beim Anlaufen der Regelung verringern, weil die Geschwindigkeit, beispielsweise von Gütern in einer Transporteinrichtung oder die Umfangsgeschwindigkeit einer Antriebsmotorwelle bzw. einer Encoderscheibe zunächst ansteigt. Somit verändert sich auch der Wert der Messwerte in der Regel weiter allmählich. Wenn sich in einem nächsten Zeitabschnitt bei wirksamer Regelung der Mittelwert über eine Anzahl von Messwerten nicht weiter verändert, aber ein aktueller Messwert im Wert abweicht, wird wenigstens eine teilweise Korrektur dieses einzelnen Messwertes erforderlich, da es physikalisch unmöglich ist, dass die Geschwindigkeit sich plötzlich in Richtung einer höheren Geschwindigkeit ändert bzw. dass die gemessene Zeitperiode plötzlich verringert ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1,        Darstellung einer konventionellen Hardware-Meßanordnung in einer Schaltungsanordnung zur Motordrehzahlregelung,

Figur 2,        Impuls/Zeit-Diagramm zum Meßablauf in der konventionellen Hardware-Meßanordnung,

Figur 3,        Schaltungsanordnung einer vereinfachten Hardware-Meßanordnung,

Figur 4,        Impuls/Zeit-Diagramm zum Meßablauf in der vereinfachten Hardware-Meßanordnung,

Figur 5,        Flußplan zum Meßablauf und zur Messwertkorrektur,

Figuren 6 und 7,    Zählwert/Zeit- und Encoder-Impuls/Zeitdiagramme,

Figur 8,        Darstellung des zeitlichen Verlaufs von Geschwindigkeitswerten.

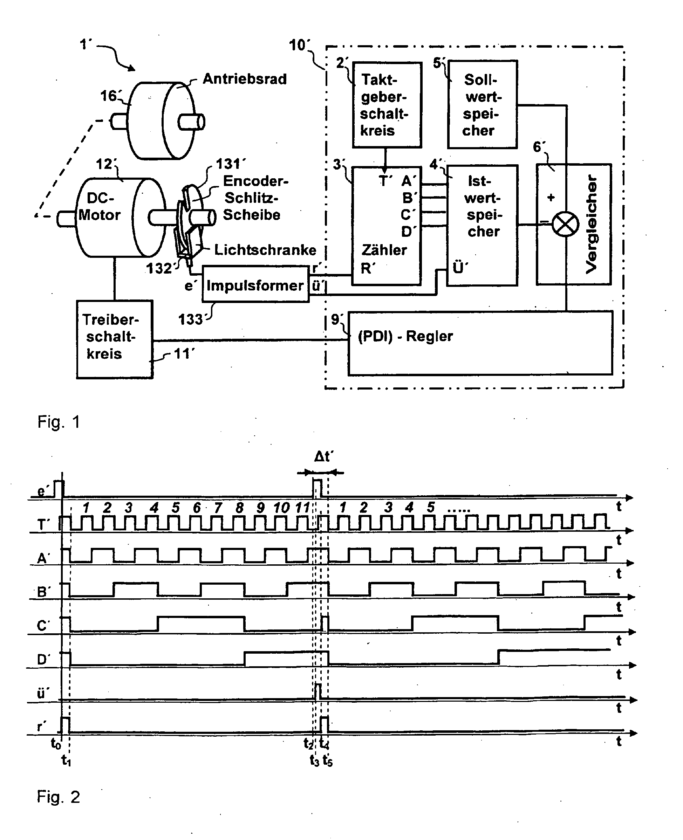

Die Figur 1 zeigt eine Darstellung einer konventionellen Hardware-Messanordnung in einer Schaltungsanordnung zur Motordrehzahlregelung. Die Motordrehzahlregelung 1' weist einen mit einem Antriebsrad 16' mechanisch gekoppelten Gleichstrommotor 12' auf. Eine Encoderschlitzscheibe 131' ist beispielsweise auf der Motorwelle form- und kraftschlüssig befestigt. Eine Lichtschranke 132' erzeugt die Encoderimpulse e' beim Umlaufen der Welle. Es kann ein Impulsformer 133' vorgesehen sein, dem die Encoderimpulse e' zugeführt werden. Eine Meß-Steuer- und Regelungsschaltung 10' weist einen PDI-Regler 9' auf, der ausgangsseitig über einen Treiberschaltkreis 11' mit dem Gleichstrommotor 12' steuerungsmäßig verbunden ist und der eingangsseitig mit dem Ausgang eines Vergleichers 6' verbunden ist. Dabei kann es sich um einen digitalen Vergleicher handeln.

Alternativ kann auch ein analoger Vergleicher eingesetzt werden, wobei in nicht gezeigter Weise an dessen Eingängen D/A-Wandler und an dessen Ausgängen ein A/D-Wandler angeschaltet sind.

Die Messanordnung besteht aus einem Taktgeberschaltkreis 2' dessen Ausgang mit einem Takteingang eines ersten Zählers 3' verbunden ist. Die binär codierte Daten-Ausgänge A', B', C' und D' des ersten Zählers 3' sind mit entsprechenden Dateneingängen eines Ist-Wertspeichers 4' verbun-den. Letzterer weist einen Steuereingang Ü' zur Auslösung einer Übernahme von BC-Daten des Zählers 3' über dessen Ausgänge auf. Die binär codierten Daten (BCD) entsprechen einem Zählwert Z. Ein Steuereingang R' zum Rücksetzen des Zählers 3' und der Steuereingang Ü' des Ist-Wertspeichers 4' sind mit entsprechenden Ausgängen des Impulsformers 133' bzw. eines entsprechend ausgestatteten Encoders verbunden.

Der Encoder erzeugt mindestens ein Encoderimpuls e' pro Drehung der Welle und der daran befestigten Encoderschlitzscheibe. Dem Zähler 3' wird erst dann ein Rücksetzsignal r' über den Steuereingang R' zugeführt, nachdem ein Steuerungssignal ü' zur Datenübernahme in den Ist-Wertspeicher 4' über den Steuereingang Ü' zugeführt wurde und die Datenübernahme des Zählwerts Z erfolgt ist, dem der Zeit-Messwert entspricht. Der Zähler 3' kann beispielsweise als Vorwärtszähler, der Ist-Wert-Speicher 4' kann als Parallel-Serien-Wandler und der digitale Vergleicher 6' kann als Rückwärtszähler ausgeführt werden. Ein digitaler Soll-Wert-Speicher 5' ist mit Voreinstelleingängen des Rückwärtszählers verbunden.

Der Parallel-Serien-Wandler kann ein Schieberegister sein, welches taktgesteuert ausgelesen wird, wobei an dessen seriellen Datenausgang der Zähleingang des Rückwärtszählers angeschlossen ist (nicht gezeigt). Beim Hochlaufen der Regelgröße und beim Betrieb unter Belastung ist der digitale Istwert niedriger, als der digitale Sollwert und folglich wird die Motordrehzahl entsprechend der sich aus dem Vergleich ergebenden Differenz nachgeregelt.

Die Drehzahl ist eine Größe die angibt, wie oft sich zum Beispiel eine Welle in einer Minute (min = 60 s) dreht. Sie wird zur Errechnung der Umfangsgeschwindigkeit $v_u$ benötigt. Die Umfangsgeschwindigkeit $v_u$ wird in Meter pro Sekunde [m/s] angegeben und ist gleich Durchmesser d [in m] mal $\pi$ (3,14159265358979323846264433832795...) mal Drehzahl n [in s$^{-1}$] gemäß der Formel:

$$v_u = d \cdot \pi \cdot n / 60 \qquad\qquad /1/$$

Für eine geradlinige gleichmäßige konstante Geschwindigkeit zum Beispiel des Transportbandes gilt die Beziehung von dem zurückgelegten Weg s in Meter [m] geteilt durch die dafür benötigte Zeit t in Sekunden [s] gemäß der Formel:

$$v = s / t \qquad\qquad /2/$$

Somit gelten nach Gleichsetzung und Umstellung der Gleichungen /1/ und /2/ die folgenden Gleichungen für Transportweg bzw. -zeit:

$$s = v \cdot t = d \cdot \pi \cdot t \cdot n / 60 \qquad\qquad /3/$$

$$t = s / v = 60 \cdot s / (d \cdot \pi \cdot n) = C / n \qquad\qquad /4/$$

Die Drehzahl n ist umgekehrt proportional zur Zeit t. Der Proportionalitätsfaktor C ist konstant. Außerdem gilt für einen Zählwert Z des Zählers bei einer Periodendauer P der Wiederkehr eines Encoderimpuls:

$$t = Z / P \qquad \text{mit} \quad P \text{ in } [\,1/sec\,], P = const. \qquad /5/$$

sowie mit Z = Zählwert eines Zählers.

Wird die Gleichung /5/ für die Messzeit t in die Gleichung /2/ eingesetzt, dann folgt daraus die Gleichung /6/:

$$v = (s \cdot P) / Z = K / Z \qquad \text{mit} \quad K = const. \qquad /6/$$

Die Geschwindigkeit v ergibt sich reziprok zum Zählwert des Zählers.

In der Figur 2 wird ein Impuls/Zeit-Diagramm zum Meßablauf in der konventionellen Hardware-Meßanordnung dargestellt. Nur der Einfachheit halber wurden nur die Signale der vier Ausgänge A', B', C' und D' des Zählers dargestellt. Das ist aber nicht so zu verstehen, dass die Zählweite der Zähler auf 16 beschränkt ist. Vielmehr kann die Zählweite beliebig vergrößert werden. Zum Zeitpunkt $t_0$ wird ein Rücksetzimpuls r' ausgelöst, der zum Rücksetzen des Zählwertes Z auf einen Anfangswert $Z_0$ führt, so dass beispielsweise alle Ausgänge A', B', C' und D' des Zählers zum Zeitpunkt $t_1$ Low-Pegel führen. Bei einer H/L-Flanke des ersten Taktimpulses *1* am Takteingang T' kippt der Schalt-Zustand am Ausgang A' von Low-Pegel auf High-Pegel. Tritt dann beispielsweise nach dem elften Taktimpulses *11* wieder ein Encoderimpuls des Signals e' auf, wird zuerst ein Signal ü' zur Datenübernahme und dann ein Rücksetzsignal r' erzeugt. Der Zähler 3' beginnt wieder von vorn die am Takteingang T' angelegten Taktimpulse zu zählen, was zu entsprechen Impulsverläufen an den Ausgängen A', B', C' und D' des Zählers führt. Man erkennt, dass ein erneutes Messen unmittelbar nach dem Auftreten eines Encoderimpuls des Signals e' ermöglicht wird. Der Zähler 3 misst die Zeiten zwischen zwei Encodersignalen durch Zählen der Taktimpulse. In vorteilhafter Weise ist die Zeitdauer $\Delta t$ klein, während der keine Messung möglich ist. Bis der Zähler zurückgesetzt werden kann, erfolgt ein Weiterzählen der Taktimpulse von *11* bis *12*, was die Genauigkeit der Messung aber unbeeinflusst lässt. In nachteiliger Weise ist jedoch der Hardware-Aufwand für eine konventionelle Hardware-Messanordnung nach Fig. 1 groß. Hier setzt die Erfindung an und es wird im Unterschied zu der in Fig.1 gezeigten Schaltung eine hinsichtlich des Bauelementeaufwands vereinfachte Schaltung eingesetzt, um die Herstellungskosten zu senken.

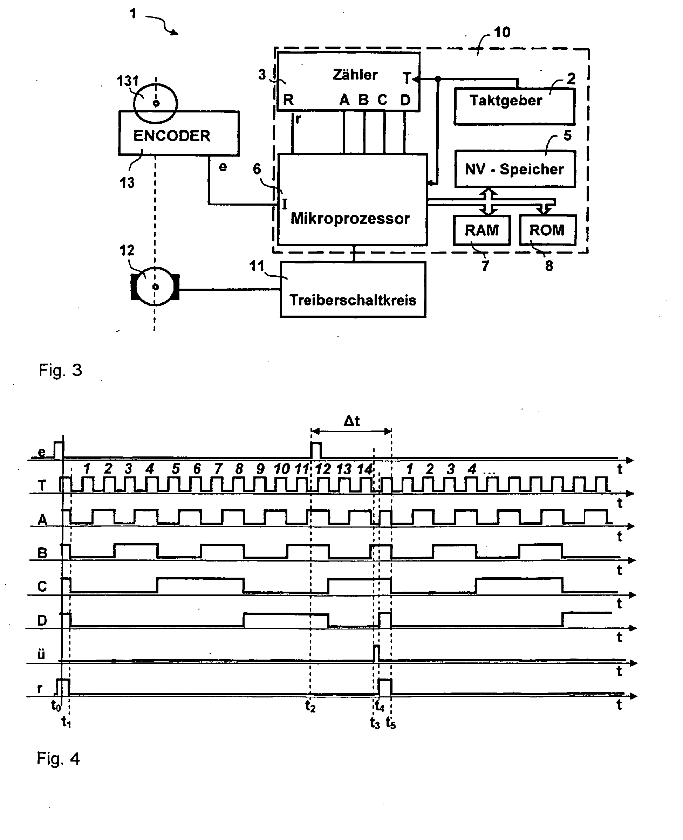

In der Figur 3 wird eine Schaltungsanordnung der vereinfachten Hardware-Meßanordnung dargestellt, welche aus einem Timer 2, 3 und einem Encoder 13 besteht, die mit einem Mikroprozessor verbunden sind. Der Timer und Mikroprozessor sind ein Bestandteil einer Mess-, Steuer- und Regelungsschaltung 10. Der Mikroprozessor 6 ist mit den Ausgängen eines Zählers 3 und ein Taktgeber 2 ist mit dem Takt- bzw. Zähleingang des Zählers 3 verbunden. Der Mikroprozessor 6 ist weiterhin mindestens mit einem nichtflüchtigen Speicher 5 für Sollwerte, mit einem flüchtigen Arbeitsspeicher (RAM) 7 für Istwerte, d.h. Messwerte wie Zählwerte bzw. Geschwindigkeitswerte und mit einem Programm-speicher (ROM) 8 adressen- steuerungs- und datenmäßig verbunden. Der Ausgang des Mikroprozessors 6 ist via einem Treiberschaltkreis 11 mit einem Gleichstrommotor 12 steuerungsmäßig verbunden. Ein Interrupt-Eingang I des Mikroprozessors 6 ist mit dem Ausgang des Encoders 13 elektrisch verbunden. Der Encoder 13 weist eine Encoderscheibe 131 auf, die wieder mit der Welle des Gleichstrommotor 12 mechanisch gekoppelt ist. Als Taktgeber 2 der Meß-Steuer- und Regelungsschaltung 10 kann auch ein Taktgenerator des Mikroprozessors genutzt werden, wenn ein geeigneter Mikroprozessor vorhanden ist. Bei jedem Encoderimpuls liefert der Mikroprozessor an einem Ausgang ein Rücksetzsignal r. Der Ausgang des Mikroprozessors 6 ist mit einem Rücksetzeingang R des Zählers 3 verbunden.

Es wird angenommen, dass der Mikroprozessor 6 zum geforderten Zeitpunkt die Istwertaufnahme durchführen kann. Der Zähler 3 misst somit die Zeiten zwischen zwei Encoderimpulsen durch Zählen der Taktimpulse. Der Mikroprozessor liest diesen Zähler aus und ermittelt aus dem entsprechenden Zählwert Z und mittels einer nichtflüchtig gespeicherten Konstanten K (Produkt aus Periodendauer P und des zurückgelegten Transportweges s entsprechend der baulichen Parameter des Antriebes) die zugehörige Transportgeschwindigkeit v.

Nach jeder Umdrehung der Motorwelle kann dabei ein vorbestimmter Wert des zurückgelegten Transportweges s der Berechnung zugrunde gelegt werden, welcher bedingt durch unveränderten mechanischen Aufbau des Encoders konstant ist. Er bleibt auch konstant, wenn der Prozessor nicht zum geforderten Zeitpunkt die Istwertaufnahme durchführen kann. Nur der Zählwert Z hat sich geändert und führt zu einem falschen Wert der Transportgeschwindigkeit v. Bei Motoren ist aufgrund der Trägheitsmomente aber eine plötzliche Geschwindigkeitsänderung unmöglich. Der Mikroprozessor ist programmiert, einzelne Messwerte einer plötzlichen Geschwindigkeitsänderung auszusortieren und unwirksam zu machen.

Jeder Wert der Transportgeschwindigkeit v wird gespeichert. Unter folgenden Kriterien werden die durch die Prozessorauslastung bedingt falsch ermittelten Geschwindigkeitswerte aussortiert und korrigiert:

$$v_n > V_- \quad \text{und} \quad v_{n-1} < V_- \tag{7}$$

mit

$$V_- = \tfrac{1}{4} \sum_{q=n-4}^{n-1} V_q = (v_{n-1} + v_{n-2} + v_{n-3} + v_{n-4})/4 \tag{8}$$

bzw.

$$Z_n < Z_- \quad \text{und} \quad Z_{n-1} > Z_- \tag{9}$$

mit

$$Z_{-} = \frac{1}{4} \sum_{q=n-4}^{n-1} Z_q = (Z_{n-1} + Z_{n-2} + Z_{n-3} + Z_{n-4})/4 \qquad /10/$$

Der aktuelle Geschwindigkeitswert der Transportgeschwindigkeit v wird mit einem arithmetischen Geschwindigkeits-Vergleichs-Mittelwert V- aus einer Gruppe von vorher ermittelten Geschwindigkeitswerten $v_{n-1}$, $v_{n-2}$, $v_{n-3}$ und $v_{n-4}$ verglichen. Ist der aktuelle Geschwindigkeitswert $v_n$ der Güter in einer Transportvorrichtung oder die Umfangsgeschwindigkeit $v_u$ einer Antriebsmotorwelle bzw. einer Encoderscheibe größer als der Mittelwert V- und der unmittelbar vorher ermittelte Geschwindigkeitswert $V_{n-1}$ kleiner als der Mittelwert V-, dann wird der ermittelte aktuelle Geschwindigkeitswert aussortiert, um ihn durch einen Mittelwert aus dem aktuellen und dem vorherigen Geschwindigkeitswert zu ersetzen. Es ergibt sich ein erster Korrekturwert als arithmetischer Mittelwert:

$$M1 = (v_{n-1} + v_n)/2 \qquad /11/$$

Alternativ wird aus dem aktuellen Zählwert Z keine Geschwindigkeit v ermittelt, sondern der Zählwert wird direkt korrigiert. Aus dem aktuellen Zählwert $Z_n$ wird mit dem arithmetischen Zählwerte-Vergleichs-Mittelwert Z- aus einer Gruppe von vorher ermittelten Zählwerten $Z_{n-1}$, $Z_{n-2}$, $Z_{n-3}$ und $Z_{n-4}$ verglichen. Ist der aktuelle Zählwert $Z_n$ der Transportgeschwindigkeit kleiner als der Zählwerte-Vergleichs-Mittelwert $Z_{-}$ und der vorher ermittelte Zählwert $Z_{n-1}$ größer als der Zählwerte-Vergleichs-Mittelwert $Z_{-}$, dann werden der aktuelle Zählwert $Z_n$ und der vorherige Zählwert $Z_{n-1}$ miteinander gemittelt und es ergibt sich alternativ ein zweiter Korrekturwert als arithmetischer Mittelwert:

$$M2 = (Z_{n-1} + Z_n)/2 \qquad /12/$$

Der arithmetische Mittelwert M1 bzw. M2, welcher auch als korrigierter Messwert oder Korrekturwert bezeichnet wird, wird im RAM gespeichert. Eine solche Korrektur macht eine Geschwindigkeitsänderung durch die Motorregelung aufgrund eines sporadisch auftretenden faschen Messwertes unwirksam. Bei Motoren ist aufgrund der Trägheitsmomente eine plötzliche Geschwindigkeitsänderung physikalisch nicht möglich, so das ein einzelner abweichender Messwert erkannt und wenigstens teilweise korrigiert werden kann. Das erfordert zwar einen erhöhten Softwareaufwand. In vorteilhafter Weise ist jedoch der Hardware-Aufwand für die Messanordnung nach Fig. 3 klein. Außerdem kann der nichtflüchtige Speicher 5 für Sollwerte in einer alternativen Schaltung für die Anwendung des Korrekturverfahrens entfallen, wenn die Sollwerte auf eine anderer Art und Weise vorgegeben werden, beispielsweise mittels einer - nicht dargestellten - Tastatur des Postverarbeitungsgerätes.

Die Figur 4 zeigt ein Impuls/Zeit-Diagramm zum Meßablauf in der vereinfachten Hardware-Meßanordnung. Nach einem durch das Auftreten eines Encoderimpulses verursachten Interrups wird zum Zeitpunkt $t_0$ ein Rücksetzimpuls r ausgelöst, der zum Rücksetzen des Zählwertes Z auf einen Anfangswert $Z_0$ führt, so dass beispielsweise alle Ausgänge A, B, C und D des Zählers zum Zeitpunkt $t_1$ Low-Pegel führen. Bei einer H/L-Flanke des ersten Taktimpulses 1 am Takteingang T kippt der Schalt-Zustand am Ausgang A von Low-Pegel auf High-Pegel. Der Zähler 3 beginnt die am Takteingang T angelegten Taktimpulse vorwärts zu zählen, was zu entsprechen Impulsverläufen an den Ausgängen A, B, C und D des Zählers führt. Tritt dann beispielsweise nach dem elften Taktimpulses 11 wieder ein Encoderimpuls des Signals e auf, erfolgt zuerst eine Datenübernahme durch den Mikroprozessor, der dann ein Rücksetzsignal r erzeugt. Man erkennt, dass ein erneutes Messen unmittelbar nach dem Auftreten eines Encoderimpuls des Signals e nicht möglich ist, weil der Mikroprozessor noch mit anderen Aufgaben beschaftigt ist. Der Zähler 3 misst durch Zählen der Taktimpulse 1 bis 11 nicht nur die Zeitdauer zwischen zwei Encoderimpulsen, sondern außerdem eine Zeitdauer nach dem zweiten Encoderimpuls, in welcher der Mikroprozessor beschäftigt ist. Bis der Mikroprozessor den Zähler zurücksetzen kann, erfolgt ein Weiterzählen der Taktimpulse von 12 bis 14. In unvorteilhafter Weise ist dadurch die Messung falsch und die Zeitdauer $\Delta t$ ist um beispielsweise drei Taktimpulse von 12 bis 14 verlängert, während der keine Messung möglich ist. Das stört jedoch den Regelvorgang nicht. Durch das vorstehende Beispiel soll ein Auftreten von Verlängerungen anderer Zeitdauer $\Delta t$ während der Messung nicht ausgeschlossen werden. Es sollte aber ausgeschlossen werden, dass der Mikroprozessor in der Mehrzahl der Messungen länger als normal beschäftigt ist. Der arithmetische Mittelwert M1 oder M2 liegt damit näher zur normalen Beschäftigungsdauer als zur verlängerten Beschäftigungsdauer des Mikroprozessors. Im Unterschied zum Korrekturfall, der sich aus der Verlängerung für den aktuellen Geschwindigkeitswert $v_n$ bzw. Zählwert $Z_n$ ergibt, kann der vorher ermittelte Geschwindigkeitswert $v_{n-1}$ bzw. Zählwert $Z_{n-1}$ ohne Korrektur sofort nach der Messung gespeichert werden.

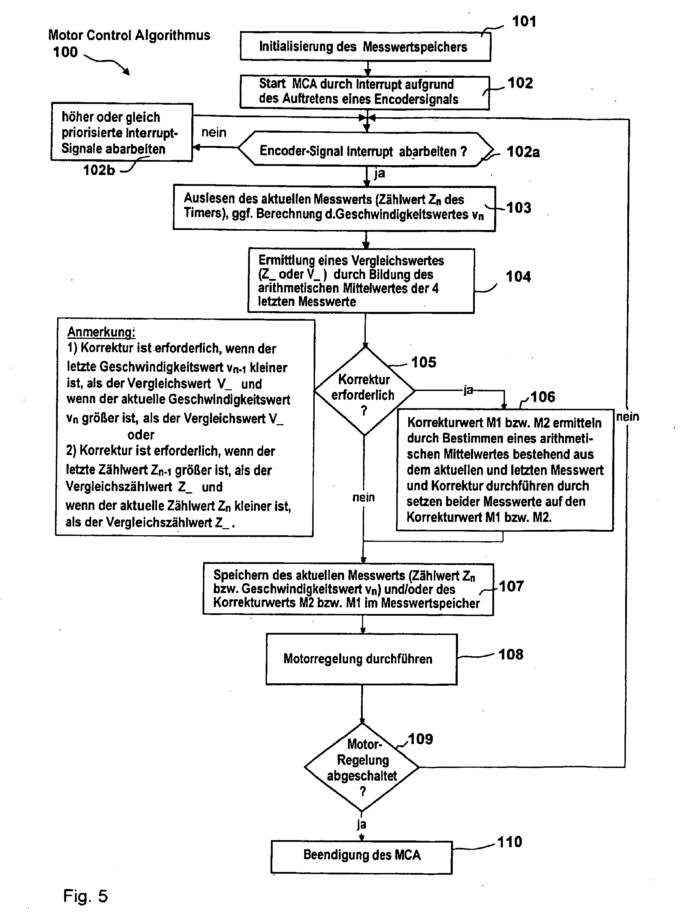

In der Figur 5 wird ein Flußplan zum Meßablauf und zur Messwertkorrektur durch den Mikroprozessor dargestellt. Der Meßablauf und die Messwertkorrektur sind dabei in einem Motor Control-Algorithmus (MCA) enthalten. Im ersten Schritt 101 erfolgt nach dem Start eine Initialisierung des Messwertspeichers des Mikroprozessors bzw. der MikroprozessorSteuerung. Dabei werden alle Speicherplätze auf den Wert Null gesetzt.

Der Messwertspeicher (RAM) ist zum Speichern von Geschwindigkeitswerten und/oder Zählwerten (Zeit) vorgesehen. Im zweiten Schritt 102 wird der Motor Control-Algorithmus (MCA) wird gestartet und die Messung begonnen, sobald ein Encoderimpuls festgestellt .wird. In einem solchen Fall wird ein Interrupt erzeugt und ein Timer gestartet.

Der zweite Schritt 102 umfaßt einen ersten Abfrageschritt 102a und mindestens einen weiteren Subschritt 102b zum Abarbeiten von Interruptroutinen des Mikroprozessors entsprechend einer festgelegten Rangfolge. Ein Interrupt wird auch beim Vorkommen eines weiteren Encoderimpulses ausgelöst. Im Subschritt 102a wird geprüft, ob ein solcher auf einem Encoder-Signal basierender Interrupt abgearbeitet werden soll. Ist das nicht der Fall, dann kann ein weiteres gleich oder höher priorisiertes Interrupt-Signal abgearbeitet und zum Anfang des Subschrittes 102a zurückverzweigt werden. Unmittelbar nach dem Start des MCA liegt aber schnell der Fall vor, dass ein weiterer auf einem Encoder-Signal basierender Interrupt abgearbeitet werden soll. Dann wird auf einen dritten Schritt 103 verzweigt, um den Timer abzufragen und die Messung zu beenden.

Im dritten Schritt 103 erfolgt ein Auslesen des aktuellen Zählwertes $Z_n$ des Timers und ggf. eine Berechnung des zugehörigen Geschwindigkeitwertes $v_n$. Der Messwert (Zähl- bzw. Geschwindigkeitwert) wird dabei zunächst im Messwertspeicher (RAM) flüchtig gespeichert. Anschließend wird der Timer vom Mikroprozessor neu gestartet. Im nachfolgenden vierten Schritt 104 erfolgt eine Ermittlung eines Vergleichswertes durch Bildung eines arithmetischen Mittelwertes über eine Anzahl gespeicherter Vorgängermesswerte (Zähl- bzw. Geschwindigkeitwerte). Der Vergleichswert $Z\_$ wird anfangs auf einen vorbestimmten Wert gesetzt bzw. V- ist anfangs 'Null'. Jeder neue Messwert führt zum Abfallen bzw. Ansteigen des Vergleichswertes und zum Hochfahren der Motorregelung. Vom vierten Schritt 104 wird auf einen zweiten Abfrageschritt 105 verzweigt, in welchem festgestellt wird, ob eine Messwertkorrektur erforderlich ist. Eine Messwertkorrektur erfolgt, wenn die Kriterien der Ungleichungen /7/ bzw. /9/ erfüllt sind, d.h. bei $v_n > V$- und $v_{n-1} < V$- bzw. $Z_n < Z\_$ und $Z_{n-1} > Z\_$.

Ist eine Messwertkorrektur erforderlich, dann wird auf den sechsten Schritt 106 verzweigt, um die Korrektur mittels einer Bildung eines arithmetischen Mittelwerts über die letzten beiden Messwerte nach den Gleichungen /11/ bzw. /12/ durchzuführen. Anschließend wird im siebenten Schritt 107 der arithmetische Mittelwert M1 bzw. M2 als korrigierter Messwert gespeichert. Anderenfalls, wenn keine Messwertkorrektur erforderlich ist, dann wird vom zweiten Abfrageschritt 105 auf den siebenten Schritt 107 direkt verzweigt, um den aktuellen Messwert zu speichern.

Im nachfolgenden achten Schritt 108 erfolgt eine Verwendung der bewerteten Messwerte in üblicher Weise für die Motorregelung. Auf den achten Schritt 108 folgt ein dritter Abfrageschritt 109, um festzustellen, ob die Motor-Regelung abgeschaltet werden soll. Ist das der Fall, dann wird vom dritten Abfrageschritt 109 auf einen Schritt 110 zur Beendigung des Motor Control-Algorithmus verzweigt.

Ist das aber nicht der Fall, dann wird vom zweiten Abfrageschritt 109 auf den Anfang des Subschrittes 102a zurück verzweigt.

In den Figuren 6 und 7 wird ein Zählwert/Zeitdiagramm und ein Encoder-Impuls/Zeitdiagramm gezeigt. Zur Verdeutlichung des Auslesens der Zählwerte $Z_n$ aus dem Timer wird jeder Zählwert als Balken dargestellt und zum einem Zeitpunkt abgetastet, der dem Interruptsignal unmittelbar folgt. Tatsächlich wird aber kein Balken, sondern ein digitaler Zählwert abgetastet, wie aus der Schaltung nach Fig. 3 ersichtlich ist. Die Figur 6 zeigt den zeitlichen Verlauf der Messwerte einer Messreihe mit allmählich sich ändernden Messwerten. Ein Interruptsignal $I_0$ wird durch das Auftreten eines Encoderimpulses $e_0$ ausgelöst und der Timer wird gestartet. Beim Auftreten eines Encoderimpulses $e_1$ wird das Interruptsignal $I_1$ ausgelöst und der Zählwert des Timers ausgelesen und im RAM zwischengespeichert (siehe Fig. 3). Das Hochzählen des Timers bis zum Auftreten eines Encoderimpulses und dem daraufhin erfolgenden Abtasten des Zählwertes $Z_n= 6$ wird durch wachsende Balken verdeutlicht.

Im dargestellten Beispiel erfolgt zunächst ein Abtasten des Zählwertes $Z_n= 6$. Dann verringert sich die Geschwindigkeit allmählich und die periodisch wiederkehrenden Encoderimpulse $e_5$ bis $e_{14}$ treten verzögert auf, wobei die Verzögerung mit einem kleinen weißen Pfeil gekennzeichnet ist. Die Encoderimpulse $e_1$ bis $e_4$ treten periodisch und in einem geringeren zeitlichen Abstand auf, als die ebenfalls periodisch auftretenden Encoderimpulse $e_5$ bis $e_{14}$. Das führt dazu, dass ab dem Encoderimpuls $e_4$ ein um einen Schritt höherer Zählwert $Z_n= 7$ abgetastet wird. Unter einem Schritt soll ein konstanter Änderungsbetrag mindestens von eins verstanden werden.

Die Figur 7 zeigt den zeitlichen Verlauf der Messwerte einer Messreihe mit einem plötzlich sich ändernden Messwert. Ein Interruptsignal $I_0$ wird wieder durch das Auftreten eines Encoderimpulses $e_0$ ausgelöst und der Timer wird gestartet. Beim Auftreten eines Encoderimpulses $e_1$ wird das Interruptsignal $I_1$ wieder unmittelbar folgend ausgelöst und der Zählwert des Timers ausgelesen und im RAM zwischengespeichert (siehe Fig. 3). Das Hochzählen des Timers bis zum Auftreten eines Encoderimpulses und dem daraufhin erfolgenden Abtasten des Zählwertes $Z_n = 7$ wird durch wachsende Balken verdeutlicht.

Im dargestellten Beispiel erfolgt zunächst ein Abtasten des Zählwertes $Z_n = 7$. Die Encoderimpulse $e_1$ bis $e_4$ treten periodisch und in einem gleichen zeitlichen Abstand auf, wie die ebenfalls periodisch auftretenden Encoderimpulse $e_5$ bis $e_{13}$. Die Messzeit des Timers ist ab dem Encoderimpuls $e_4$ bis zum Auftreten des jedoch verlängert, da das Interruptsignal $I_5$ zeitlich verzögert abgearbeitet wird. Das führt zu einer um $\Delta t_{scan}$ verspäteten Abtastung des Timers, wodurch nun ein um einen Schritt höherer Zählwert $Z_n = 8$ abgetastet wird. Im dargestellten Beispiel wird angenommen, dass beim Auftreten eines nachfolgenden Encoderimpulses $e_6$ das Interruptsignal $I_6$ wieder unmittelbar folgend ausgelöst und der Zählwert $Z_n = 6$ des Timers ausgelesen und im RAM zwischengespeichert wird (siehe Fig. 3). Die Messzeit des Timers ist verkürzt, da das Interruptsignal $I_6$ zeitlich unverzögert abgearbeitet wird. Das führt dazu, dass mit dem Encoderimpuls $e_6$ ein um zwei Schritte verringerter Zählwert $Z_n = 6$ abgetastet wird und ein plötzlich sich ändernder Messwert abgetastet wird. Unter einem Schritt soll ein konstanter Änderungsbetrag mindestens von eins verstanden werden.

Die Messzeit des Timers ist ab dem Encoderimpuls $e_6$ wieder wie am Anfang der Messreihe konstant, da die Interruptsignale $I_6$ bis $I_{13}$ wieder zeitlich unverzögert abgearbeitet werden.

Anhand der Figur 8 wird der zeitliche Verlauf von ermittelten Geschwindigkeitswerten dargestellt. Die einzelnen Messwerte des Times werden vom Mikroprozessor in Geschwindigkeitswerte umgerechnet und gespeichert. Die einzelnen Geschwindigkeitswerte einer Messreihe mit einer plötzlichen Änderung des Istwertes von einem vorherigen Geschwindigkeitswert zum aktuellen Geschwindigkeitswert sind durch einen gestrichelt gezeichneten Kreis gekennzeichnet. Dabei handelt es sich um eine Änderung mit der dort auftretenden Schrittweite, welche physikalisch nicht möglich ist. Jeder ausgelesene Messwert mit einer plötzlichen Änderung wird deshalb durch einen wenigstens teilweise korrigierten Messwert ersetzt, was anhand einer Strich-Punkt-Linie für verwendete Geschwindigkeits-Istwerte dargestellt wird. Es ist offensichtlich, dass sich plötzlich ändernde Geschwindigkeitswerte von allmählich ändernden Geschwindigkeitswerten unterscheiden. Bei letzteren handelt es sich um eine Änderung mit einer auftretenden Schrittweite, welche physikalisch möglich ist.

Die Erfindung ist nicht auf die vorliegenden Ausführungsform mit einem Gleichstrommotor beschränkt. So können offensichtlich weitere andere Ausführungen der Erfindung für andere Arten an Antriebsmotoren entwickelt bzw. eingesetzt werden, die vom gleichen Grundgedanken der Erfindung ausgehen und von den anliegenden Ansprüchen umfaßt werden.

**Patentansprüche**

1.  Korrekturverfahren für eine mikroprozessorgesteuerte digitale Regelung eines Antriebsmotors, wobei die für die Regelung des Antriebsmotors (12) verwendete Anordnung vereinfacht ist, indem keine spezielle Messschaltung, sondern eine beliebig bis auf einen Encoder (13) und einen Timer (2,3) reduzierte Messschaltung eingesetzt wird, wodurch die Istwertaufnahme nicht immer vom Mikroprozessor (6) zum vorgegebenen Zeitpunkt durchgeführt wird, der von einem Encoderimpuls vorgegeben wird, wodurch einzelne Messwerte einer Messreihe mit einer plötzlichen Änderung des Istwertes von einem vorherigen zum aktuellen Messwert auftreten, welche sich von allmählich ändernden Messwerten unterscheiden, wobei die einzelnen Messwerte mit einer plötzlichen Änderung ausgelesen und für die Regelung korrigiert werden, wobei jeder ausgelesene Messwert mit einer plötzlichen Änderung durch einen wenigstens teilweise korrigierten Messwert ersetzt wird, wobei sich der wenigstens teilweise korrigierte Messwert aus einem Mittelwert ergibt, der aus einem aktuellen und einem vorherigen Messwert in der Messreihe gebildet wird.

2.  Korrekturverfahren, nach Anspruch 1, **gekennzeichnet** d a - d u r c h, dass die Istwerte Zählwerte sind, deren Anzahl der Länge einer Messzeitperiode proportional ist.

3.  Korrekturverfahren, nach den Ansprüchen 1 bis 2, gekennzeich-n e t **dadurch**, dass eine Berechnung von Geschwindigkeitswerten aus den Zählwerten erfolgt.

4.  Korrekturverfahren, nach den Ansprüchen 1 bis 3 gekennzeich-n e t **dadurch**, dass eine Bewertung von Zählwerten bzw. von daraus ermittelten Geschwindigkeitswerten und deren Korrektur sowie eine Bereitstellung von Stellimpulsen für einen Antriebsmotor erfolgt.

5.  Korrekturverfahren, nach den Ansprüchen 1, 3 und 4, **gekennzeichnet dadurch, dass** die Korrektur eines Messwerts, insbesondere eines aktuellen Geschwindigkeitswerts erfolgt, wenn der aktuelle Geschwindigkeitswert $V_n$ der Güter in einer Transportvorrichtung oder die Umfangsgeschwindigkeit $V_u$ einer Antriebsmotorwelle bzw. einer Encoderscheibe größer als der arithmetische Mittelwert V- aus einer Gruppe von vorher ermittelten Geschwindigkeits-

werten $V_{n-1}$, $V_{n-2}$, $V_{n-3}$ und $V_{n-4}$ und der unmittelbar vorher ermittelte Geschwindigkeitswert $V_{n-1}$ kleiner als der vorgenannte Mittelwert V- ist.

6. Korrekturverfahren, nach den Ansprüchen 1, 3 bis 5, **gekennzeichnet dadurch, dass** die Korrektur eines Messwerts, insbesondere eines aktuellen Geschwindigkeitswerts erfolgt, indem der aktuelle und vorherige Geschwindigkeitswert miteinander gemittelt werden und sich ein arithmetischer Mittelwert $M1 = (V_{n-1} + V_n) / 2$ ergibt, der als korrigierter Messwert gespeichert wird.

7. Korrekturverfahren, nach den Ansprüchen 1 , 2 und 4, **gekennzeichnet dadurch, dass** die Korrektur eines Messwerts, insbesondere eines aktuellen Zählwertes Z erfolgt, wenn der aktuelle Zählwert $Z_n$ eines Zählers zur Zeitmes- sung kleiner als der arithmetische Zählwerte-Mittelwert Z- aus einer Gruppe von vorher ermittelten Zählwerten $Z_{n-1}$, $Z_{n-2}$, $Z_{n-3}$ und $Z_{n-4}$ und der vorher ermittelte Zählwert $Z_{n-1}$ größer als der vorgenannte Zählwerte-Mittelwert Z- ist.

8. Korrekturverfahren, nach den Ansprüchen 1, 2, 4 und 7, **gekennzeichnet dadurch, dass** die Korrektur eines Messwerts, insbesondere eines aktuellen Zählwertes $Z_n$ erfolgt, indem der aktuelle Zählwert $Z_n$ und der vorherige Zählwert $Z_{n-1}$ miteinander gemittelt werden und sich ein arithmetischer Mittelwert $M2 = (Z_{n-1} + Z_n) / 2$ ergibt, der als korrigierter Messwert gespeichert wird.

**Claims**

1. A correction method for a microprocessor-controlled digital control of a drive motor, wherein the arrangement used for the control of the drive motor (12) is simplified in such manner that there is not used a special measuring circuit, but a measuring circuit discretionarily reduced to an encoder (13) and a timer (2, 3) so that the actual-value detection is not always carried out by the microprocessor (6) at the pre-defined point of time that is defined by an encoder pulse, which is why there occur individual measured values in a measurement series with a sudden change of the actual value from a preceding to the current measured value which differ from gradually changing measured values, wherein the individual measured values with a sudden change are read out and corrected for the control, wherein every read measured value with a sudden change is replaced by an at least partially corrected measured value, said at least partially corrected measured value resulting from an average value formed from a current and a preceding measured value in the measurement series.

2. A correction method according to Claim 1, **characterized in that** the actual values are count values the number and length of which is proportional to a measurement period.

3. A correction method according to Claims 1 and 2, **characterized in that** the speed values are calculated from the count values.

4. A correction method according to Claims 1 to 3, **characterized in that** count values and speed values determined therefrom are analyzed and corrected and control pulses for a drive motor are provided.

5. A correction method according to Claims 1, 3 and 4, **characterize d in that** a measured value, in particular a current speed value is corrected when the current speed value $V_n$ of the goods in a transport device or the circumferential speed $V_u$ of a drive motor shaft or of an encoder disc is higher than the arithmetical mean value V_ of a group of speed values determined before $V_{n-1}$, $V_{n-2}$, $V_{n-3}$ and $V_{n-4}$, and the speed value determined immediately before $V_{n-1}$ is lower than the above-mentioned mean value V_.

6. A correction method according to Claims 1, 3 to 5, **characterized in that** a measured value, in particular a current speed value is corrected by taking the mean of the current and the preceding speed value so that there results an arithmetical mean value $M1 = (V_{n-1} + V_n) / 2$ that is stored as corrected measured value.

7. A correction method according to Claims 1, 2 and 4, **characterize d in** that a measured value, in particular a current count value Z is corrected when the current count value $Z_n$ of a counter for time measurement is lower than the arithmetical mean count value Z_ of a group of count values determined before $Z_{n-1}$, $Z_{n-2}$, $Z_{n-3}$ and $Z_{n-4}$, and the count value determined before $Z_{n-1}$ is higher than the above-mentioned mean count value Z_.

8. A correction method according to Claims 1, 2, 4 and 7, **characteri zed in that** a measured value, in particular a current count value $Z_n$ is corrected by taking the mean of the current count value $Z_n$ and the preceding count value

$Z_{n-1}$ so that there results an arithmetical mean value M2 = $(Z_{n-1} + Z_n)$ / 2 that is stored as corrected measured value.

**Revendications**

1.  Procédé de correction pour une régulation numérique d'un moteur d'entraînement, dont le dispositif utilisé et commandé par microprocesseur pour la régulation du moteur d'entraînement (12) est simplifié, par le fait qu'il n'est pas nécessaire d'utiliser un circuit de mesure spécial, mais où l'on utilise un circuit de mesure quelconque équipé d'un encodeur (13) et d'un séquenceur (2, 3) et dans lequel l'enregistrement de la valeur réelle n'est pas toujours effectué par le microprocesseur (6) au moment précis déterminé par une impulsion de l'encodeur, et par lequel surviennent, dans une série de mesures, des valeurs de mesure individuelles, dont la valeur réelle est soudainement modifiée par rapport à celle mesurée auparavant et qui diffèrent des variations progressives des valeurs de mesure, les valeurs individuelles soudainement modifiées étant relevées et corrigées pour la régulation, tandis que chaque valeur soudainement modifiée est remplacée par une valeur de mesure corrigée au moins partiellement, et que cette valeur de mesure au moins partiellement corrigée résulte d'une valeur de mesure moyenne, qui est formée par une valeur de mesure actuelle et précédente de la série de mesures.

2.  Procédé de correction selon la revendication 1, **caractérisé en ce que** les valeurs réelles sont des valeurs de comptage, dont le nombre de durée est proportionnel à une période de mesures.

3.  Procédé de correction selon les revendications 1 à 2, **caractérisé en ce que** le calcul des valeurs de vitesse s'effectue à partir des valeurs de comptage.

4.  Procédé de correction selon les revendications 1 à 3, **caractérisé en ce qu'**il résulte, une évaluation des valeurs de comptage ou encore des valeurs de vitesse déduites, leur correction ainsi qu'une génération d'impulsions de réglages pour un moteur d'entraînement.

5.  Procédé de correction selon les revendications 1, 3 et 4, **caractérisé en ce que** la correction d'une valeur de mesure et en particulier d'une valeur de vitesse actuelle soit effectuée, si la valeur actuelle de la vitesse $V_n$ des produits d'un dispositif de convoyage ou la vitesse périphérique Vu d'un arbre de moteur d'entraînement ou encore d'un disque encodeur, est supérieure à la valeur moyenne arithmétique V_ , résultante d'un groupe de valeurs de vitesse $V_{n-1}$, $V_{n-2}$, $V_{n-3}$ et $V_{n-4}$, déterminées au préalable et que la valeur de vitesse $V_{n-1}$ déterminée juste auparavant soit inférieure à la valeur moyenne V_ nommée auparavant.

6.  Procédé de correction selon les revendications 1, 3 à 5, **caractérisé en ce que** la correction d'une valeur de mesure et en particulier d'une valeur de vitesse actuelle soit effectuée, en faisant la moyenne de la valeur de vitesse actuelle et précédente et qu'il en résulte une valeur moyenne arithmétique M1 = $(V_{n-1} + V_n)$ / 2, qui est enregistrée en tant que valeur de mesure corrigée.

7.  Procédé de correction selon les revendications 1, 2 et 4, **caractérisé en ce que** la correction d'une valeur de mesure et en particulier d'une valeur de comptage Z actuelle soit effectuée, si la valeur de comptage $Z_n$ actuelle d'un compteur horaire est inférieure à la valeur moyenne Z_ des valeurs de comptage arithmétiques, issues d'un groupe de valeurs de comptage $Z_{n-1}$, $Z_{n-2}$, $Z_{n-3}$ et $Z_{n-4}$, déterminées auparavant et que la valeur de comptage $Z_{n-1}$ déterminée précédemment est supérieure à la valeur moyenne Z_ des valeurs de comptage, nommée précédemment.

8.  Procédé de correction selon les revendications 1, 2, 4 et 7, **caractérisé en ce que** la correction d'une valeur de mesure et en particulier d'une valeur de comptage actuelle $Z_n$ soit effectuée, en faisant la moyenne de la valeur de comptage actuelle $Z_n$ et précédente $Z_{n-1}$ et qu'il en résulte une valeur moyenne arithmétique M2 = $(Z_{n-1} + Z_n)$ / 2, qui est enregistrée en tant que valeur de mesure corrigée.

Fig. 1

Fig. 2

Fig. 3

Fig. 4

Motor Control Algorithmus
**100**

**101**

Initialisierung des Messwertspeichers

Start MCA durch Interrupt aufgrund des Auftretens eines Encodersignals — **102**

höher oder gleich priorisierte Interrupt-Signale abarbeiten
**102b**

nein ← Encoder-Signal Interrupt abarbeiten ? — **102a**

ja

Auslesen des aktuellen Messwerts (Zählwert $Z_n$ des Timers), ggf. Berechnung d.Geschwindigkeitswertes $v_n$ — **103**

Ermittlung eines Vergleichswertes ($Z\_$ oder $V\_$) durch Bildung des arithmetischen Mittelwertes der 4 letzten Messwerte — **104**

<u>Anmerkung:</u>
1) Korrektur ist erforderlich, wenn der letzte Geschwindigkeitswert $v_{n-1}$ kleiner ist, als der Vergleichswert $V\_$ und wenn der aktuelle Geschwindigkeitswert $v_n$ größer ist, als der Vergleichswert $V\_$
oder
2) Korrektur ist erforderlich, wenn der letzte Zählwert $Z_{n-1}$ größer ist, als der Vergleichszählwert $Z\_$ und wenn der aktuelle Zählwert $Z_n$ kleiner ist, als der Vergleichszählwert $Z\_$ .

**105**
Korrektur erforderlich ?

ja — **106**

Korrekturwert M1 bzw. M2 ermitteln durch Bestimmen eines arithmetischen Mittelwertes bestehend aus dem aktuellen und letzten Messwert und Korrektur durchführen durch setzen beider Messwerte auf den Korrekturwert M1 bzw. M2.

nein

nein

Speichern des aktuellen Messwerts (Zählwert $Z_n$ bzw. Geschwindigkeitswert $v_n$) und/oder des Korrekturwerts M2 bzw. M1 im Messwertspeicher — **107**

Motorregelung durchführen — **108**

**109**
Motor-Regelung abgeschaltet ?

ja

Beendigung des MCA — **110**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 177055 B2
- EP 1755011 A2
- EP 589668 B2
- US 6247774 B1
- US 5083072 A